# EUROPEAN PATENT APPLICATION

(11) **EP 2 477 336 A1**
(43) Date of publication of application: **18.07.2012**
(21) Application number: 10815261.2
(22) Date of filing: 24.08.2010
(51) Int. Cl.: H04B 1/10

(54) **SIGNAL PROCESSING DEVICE AND SIGNAL PROCESSING METHOD**

(30) Priority: 11.09.2009 JP 2009210210
(71) Applicant: Mitsumi Electric Co., Ltd., Tama-shi Tokyo 206-8567 (JP)
(72) Inventor: FUJII, Masanobu, Tama-Shi Tokyo 206-8567 (JP); KITAGAWA, Makoto, Tama-Shi Tokyo 206-8567 (JP); YASHIMA, Kiminori, Tama-Shi Tokyo 206-8567 (JP)
(74) Representative: Collin, Jérôme
(86) International application number: PCT/JP2010/064270
(87) International publication number: WO 2011/030664

(57) **Abstract**

A signal processing device includes a mixer 6 to perform frequency conversion of a received high-frequency signal into an intermediate-frequency signal corresponding to signal components of a desired channel, an ADC 8 to convert the intermediate-frequency signal into a digital signal, and a digital demodulation unit 300 to demodulate the digital signal. The demodulation unit 300 includes a band limiting filter 9 to switch a pass band for the digital signal, and a detecting unit 10 to detect a power distribution of the signal components of the desired channel and a power distribution of signal components of a neighboring channel adjacent to the desired channel from the digital signal before being input to the filter 9, wherein the pass band of the filter 9 is switched to a pass band selected based on the power distributions of the desired and neighboring channels detected by the detecting unit 10.

## Description

### TECHNICAL FIELD

The present disclosure relates to a signal processing device and a signal processing method which are adapted to process a received high-frequency signal.

### BACKGROUND ART

An FM receiver is known. The FM receiver includes a multiplier to perform multiplication of an intermediate-frequency signal (IF signal) and a reference frequency signal, and a low pass filter to attenuate unnecessary harmonic components from an output signal of the multiplier. The FM receiver is arranged to detect the presence of interference noise based on an output signal of the low pass filter. For example, see Patent Document 1 listed below.

On the other hand, in a radio tuner IC, there may a case in which distortion of an audio output signal is present when interference noise of a neighboring channel adjacent to a desired channel enters the broadcast receiving band, and thereby the audibility gets worse. To eliminate the problem, a band limit filter which removes the interference noise of the neighboring channel entering the broadcast receiving band may be used to improve the audibility of the audio output signal.

### DISCLOSURE OF THE INVENTION

### PROBLEM TO BE SOLVED BY THE INVENTION

However, if a suitable pass band is not selected when the band limit filter is used, not only the interference noise of the neighboring channel but also the signal component of the desired channel will be attenuated, and the audibility of the output audio signals will deteriorate.

Accordingly, in one aspect, the present disclosure provides a signal processing device and a signal processing method which are capable of attaining both improvement in the receiving performance of a desired channel and reduction of the interference noise of a neighboring channel.

### MEANS TO SOLVE THE PROBLEM

In an embodiment which solves or reduces one or more of the above-mentioned problems, the present disclosure provides a signal processing device which processes a received high-frequency signal, the signal processing device including: a frequency conversion unit to perform frequency conversion of the received high-frequency signal into an intermediate-frequency signal corresponding to signal components of a desired channel; an AD conversion unit to perform AD conversion of the intermediate-frequency signal into a digital signal; and a digital demodulation unit to demodulate the digital signal, the digital demodulation unit including: a filter unit having a plurality of pass bands which are mutually different to generate an output signal containing the signal components of the desired channel from the digital signal; and a detecting unit to detect a power distribution of the signal components of the desired channel and a power distribution of signal components of a neighboring channel adjacent to the desired channel from the digital signal before being input to the filter unit, wherein a pass band of the filter unit is switched to a pass band selected from the plurality of pass bands based on the power distributions of the signal components of the desired channel and the neighboring channel detected by the detecting unit.

In an embodiment which solves or reduces one or more of the above-mentioned problems, the present disclosure provides a signal processing method which processes a received high-frequency signal, the method including: a frequency conversion step of performing frequency conversion of the received high-frequency signal into an intermediate-frequency signal corresponding to signal components of a desired channel; an AD conversion step of performing AD conversion of the intermediate-frequency signal into a digital signal; and a demodulation step of demodulating the digital signal, the demodulation step including: a detection step of detecting a power distribution of the signal components of the desired channel and a power distribution of signal components of a neighboring channel adjacent to the desired channel from the digital signal before being input to a filter unit having a plurality of pass bands which are mutually different to generate an output signal containing the signal components of the desired channel from the digital signal; and a switching step of switching a pass band of the filter unit to a pass band selected from the plurality of pass bands based on the power distributions of the signal components of the desired channel and the neighboring channel detected in the detection step.

### EFFECT OF THE INVENTION

According to the present disclosure, both improvement in the receiving performance of a desired channel and reduction of the interference noise of a neighboring channel can be attained.

### BRIEF DESCRIPTION OF THE DRAWINGS

FIG. 1 is a block diagram of a tuner circuit 100.
FIG. 2 is a block diagram of a monitoring circuit 200 which monitors a signal distribution in a pass band.
FIG. 3 is a diagram for explaining the principle of a digital mixer 32.
FIG. 4 is a diagram showing the relationship between the pass band of a band limit filter 9 and the power measured by a measuring unit 34.
FIG. 5 is a flowchart for explaining a signal processing method which is performed by the tuner circuit 100.
FIG. 6 is a flowchart for explaining the process performed at a power distribution detection step S4.
FIG. 7 is a flowchart for explaining the detailed process performed at the power distribution detection step S4.
FIG. 8 is a diagram showing filter characteristics of a low pass filter 33.
FIG. 9 is a diagram showing a power distribution of an output signal of a band limit filter 9.
FIG. 10 is a diagram showing the relationship between the pass band of the band limit filter 9 and the power measured by the measuring unit 34.
FIG. 11 is a diagram showing a waveform of audio signals output when selecting pass band BW 180 whose bandwidth is 180 kHz.
FIG. 12 is a diagram showing a waveform of audio signals output when selecting pass band BW 120 whose bandwidth is 120 kHz.
FIG. 13 is a diagram showing an IC 400 for radio tuner which is an example of the signal processing device.
FIG. 14 is a diagram showing selector circuits SL1-SL4.
FIG. 15 is a diagram showing selector circuits SL11-SL14 and SL21-SL24.

### BEST MODE FOR CARRYING OUT THE INVENTION

A description will be given of embodiments of the present disclosure with reference to the accompanying drawings.

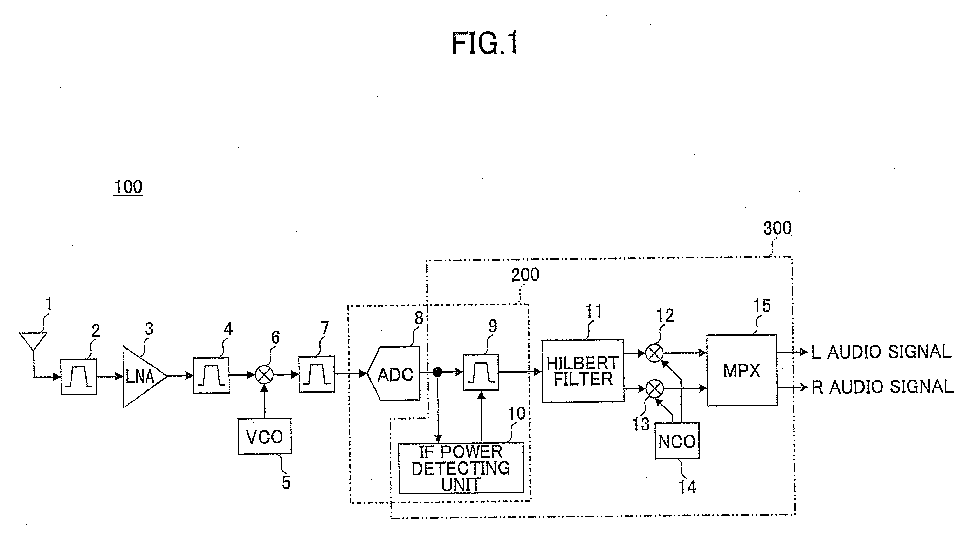

FIG. 1 is a block diagram of a tuner circuit 100 of an embodiment of the present disclosure.

The tuner circuit 100 is a signal processing device which processes a received high-frequency signal. The tuner circuit 100 includes, as its main components, a frequency conversion unit, an AD conversion unit, and a digital demodulation unit.

The frequency conversion unit performs frequency conversion of a received high-frequency signal into an intermediate-frequency signal containing an intermediate frequency corresponding to a signal component of a desired receiving channel.

The frequency conversion unit shown in FIG. 1 includes an RF (radio frequency) band pass filter 2 to which a high-frequency signal received at an antenna 1 is input, an LNA (low noise amplifier) 3 which amplifies an output signal of the RF band pass filter 2, an RF band pass filter 4 to which an output signal of the LNA 3 is input, a VCO (local oscillator) 5 which generates a locally oscillated signal, a mixer 6 which mixes an output signal of the RF band pass filter 4 with the locally oscillated signal, and an IF band pass filter 7 to which an output signal of the mixer 6 is input. The locally oscillated signal is an oscillation signal for converting the received high-frequency signal into the intermediate-frequency signal of the intermediate frequency corresponding to the desired receiving channel.

The AD conversion unit performs AD conversion of the intermediate-frequency signal (IF signal) output from the IF band pass filter 7 into a digital signal. The AD conversion unit shown in FIG. 1 includes an ADC (analog-to-digital converter) 8.

The digital demodulation unit demodulates the digital signal output from the AD conversion unit. The digital demodulation unit shown in FIG. 1 is a digital demodulation unit 300. The digital demodulation unit 300 includes as its main components a filter unit which limits the band through which the digital signal can pass, and a power distribution detecting unit which detects a power distribution of the intermediate-frequency signal.

The filter unit has a plurality of mutually different pass bands for taking out the output signal containing the signal component of the desired channel specified by the user from the digital signal. The filter unit shown in FIG. 1 is a band limit filter 9.

The power distribution detecting unit detects a power distribution of the signal component of the desired channel and a power distribution of the signal component of the neighboring channel from the digital signal before being input to the filter unit. The power distribution detecting unit shown in FIG. 1 is an IF power detecting unit 10.

In the tuner circuit 100, the pass band of the band limit filter 9 is switched to a pass band selected from the plurality of mutually different pass bands based on both the power distribution of the signal component of the desired channel detected by the IF power detecting unit 10 and the power distribution of the signal component of the neighboring channel detected by the IF power detecting unit 10.

In the case of the tuner circuit 100, the pass band of the band limit filter 9 is switched based on both the power distribution of the signal component of the desired channel and the power distribution of the signal component of the neighboring channel. Therefore, the pass band of the band limit filter 9 can be changed to a suitable pass band at which the power of the signal component of the desired channel does not become too small and the power of the signal component of the neighboring channel does not become too large. Hence, both improvement in the receiving performance of the desired channel and reduction of the interference noise of the neighboring channel can be attained.

In FIG. 1, a Hilbert filter 11 performs Hilbert transform of the output signal output from the band limit filter 9 after filtering. Digital mixers 12 and 13 perform multiplication of the output signal of the Hilbert filter 11 and the discrete sine wave signal output from an NCO (numerical control oscillator) 14 respectively, and supply the resulting output signals to an MPX 15. The MPX 15 is a multiplex circuit. The MPX 15 decodes the received signals into a right-hand side audio signal and a left-hand side audio signal.

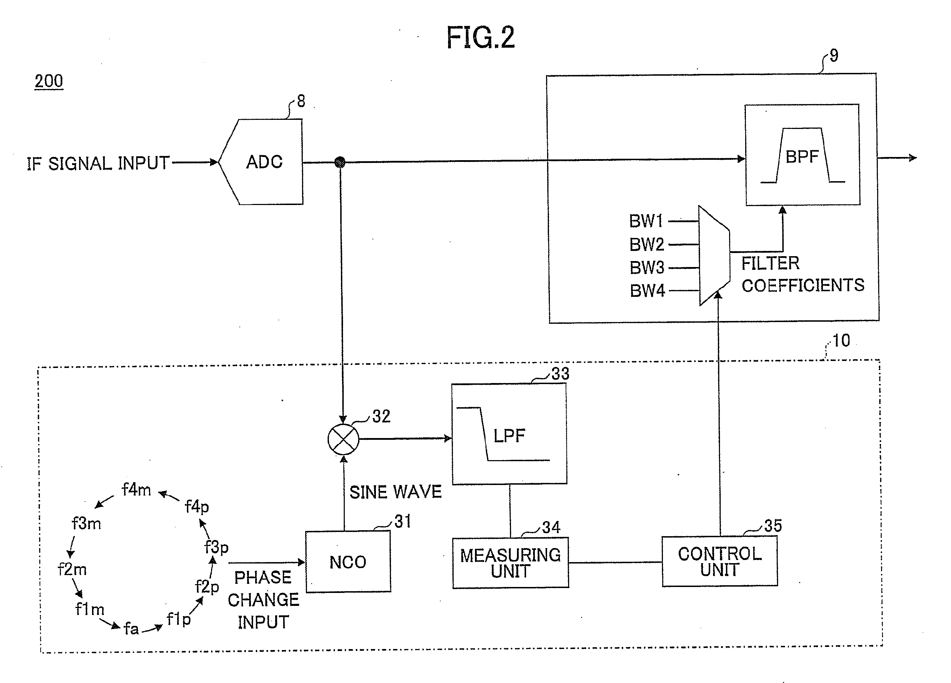

FIG. 2 is a block diagram of a monitoring circuit 200 which monitors a signal distribution in a pass band. As shown in FIG. 2, the IF power detecting unit 10 includes a digital mixer 32, a low pass filter 33, a measuring unit 34, and a control unit 35. The IF power detecting unit 10 includes a numerical control oscillator (NCO) 31 which outputs a trigonometric function signal, such as a sine wave signal, which is input to the digital mixer 32.

The digital mixer 32 performs multiplication of the digital signal output from the ADC 8 and before being input to the band limit filter 9, by the sine wave signal whose frequency sequentially changes to one among the intermediate frequency and one or more surrounding frequencies of the intermediate frequency.

The NCO 31 is cable of generating a sine wave signal of an arbitrary frequency according to the CORDIC algorithm, for example. Therefore, the NCO 31 can selectively supply one of a sine wave signal whose frequency corresponds to the intermediate frequency and a sine wave signal whose frequency corresponds to one of the surrounding frequencies which are in the vicinity of the intermediate frequency (the selected sine wave signal being changed sequentially) to the digital mixer 32. The surrounding frequency output from the NCO 31 is a frequency located outside a corresponding one of the plurality of pass bands provided beforehand in the band limit filter 9.

The low pass filter 33 receives the output signal of the digital mixer 32 and attenuates the signal component on the high frequency side.

The measuring unit 34 measures the power of the signal component of the intermediate frequency and the power of the signal component of the surrounding frequency based on the output signal of the low pass filter 33.

The control unit 35 detects the power distribution of the signal component of the desired channel and the power distribution of the signal component of the neighboring channel based on the measurement results of the measuring unit 34.

In this manner, the power distribution in the pass band is monitored based on the output signal of the digital mixer 32, and the circuit size can be reduced. That is, in order to select the band limit filter having a cut-off frequency for attenuating the interference noise of the neighboring channel without attenuating the signal component of the desired channel as much as possible, it is necessary to monitor the power distribution in the pass band.

However, according to the related art, in order to check the power distribution in the pass band, a large-scale circuit, such as an FFT (fast Fourier transform) circuit, is needed. In contrast, in the case of the present disclosure, the monitoring of the power distribution in the pass band can be performed by using the digital mixer 32 in a small-scale circuit.

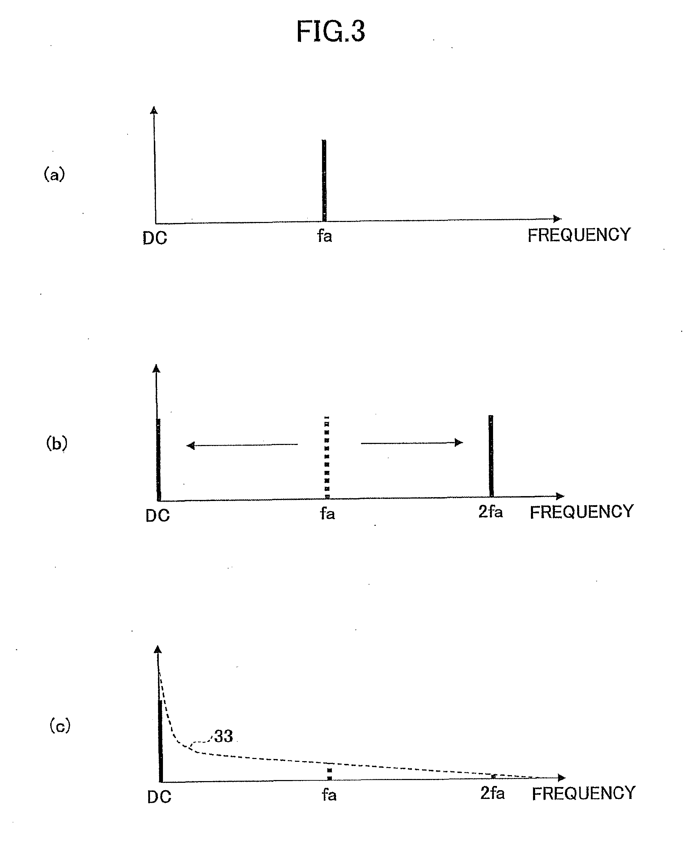

FIG. 3 is a diagram for explaining the principle of the digital mixer 32.

According to the product formulae of the trigonometry, the condition: sin (2nf1) x sin (2nf2) = 1/2 {cos 2n(f1-f2) - cos 2n(f1+f2)} is satisfied. As is apparent from the formulae, the multiplication of two signals can be converted into a signal of the sum of the frequencies of the two signals and a signal of the difference of the frequencies of the two signals.

That is, if the intermediate-frequency signal is multiplied by the signal of a frequency fa (where the power is to be observed), the signal components of the frequency fa within the intermediate-frequency signal are changed to the signal components near the frequency of 2fa (=fa+fa) and the signal components near the DC (=(fa-fa)=0).

By passing the output signal of the digital mixer after the multiplication through the low pass filter (the low pass filter 33 in FIG. 2), the maximum of the amplitude of the signal (the output signal of the low pass filter 33) in which the frequency components other than those near the DC (the frequency-difference signal) are attenuated can be measured as the signal intensity.

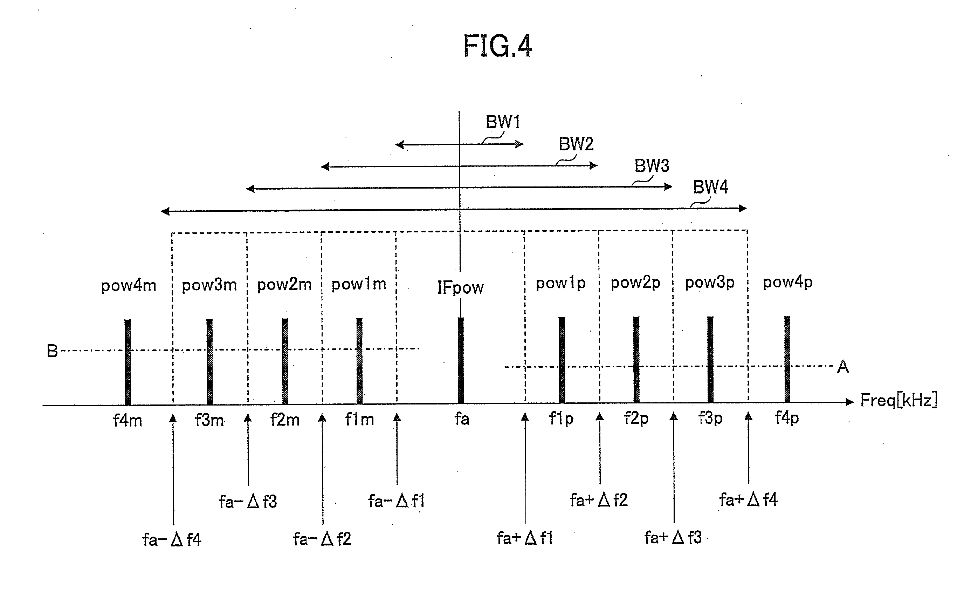

FIG. 4 is a diagram showing the relationship between the pass band of the band limit filter 9 and the power measured by the measuring unit 34.

The measuring unit 34 measures a power (amplitude) IFpow of the signal component of the intermediate frequency fa and powers of the signal components of the surrounding frequencies which are in the vicinity of the intermediate frequency (in FIG. 4, powers pow1p-pow4p corresponding to the surrounding frequencies f1p-f4p on the high frequency side of the intermediate frequency fa, and powers pow1m-pow4m corresponding to the surrounding frequencies f1m-f4m on the low frequency side of the intermediate frequency fa are measured).

The power of the frequency to be observed is dropped to the level near the DC by performing the multiplication of the intermediate-frequency signal by the sine wave signal of the frequency to be observed at the digital mixer 32. The higher harmonic components produced when the multiplication is performed are attenuated by the low pass filter 33. By changing periodically the frequency of the sine wave signal input to the digital mixer 32, the power distribution in the vicinity of the frequency of the intermediate-frequency signal can be observed.

The surrounding frequency sequentially output from the NCO 31 is a frequency with the band (non-overlapping band) where a first pass band of the plurality of pass bands provided beforehand in the band limit filter 9 and a second pass band wider than the first pass band and including the first pass band do not overlap each other. For example, a surrounding frequency f1p is a frequency within a non-overlapping band where a pass band BW1 and a pass band BW2 wider than the pass band BW1 do not overlap with each other. The same feature can also be applied to the other surrounding frequencies f2p, f3p, f1m, f2m and f3m.

Although the surrounding frequency may be an arbitrary frequency within the non-overlapping band, it is preferred that the surrounding frequency is a central frequency of the non-overlapping band, which allows the power of the frequency within the non-overlapping band to be measured without making the measurement biased. For example, the surrounding frequencies f1p is a central frequency of the bandwidth (Δf2 - Δf1) of the non-overlapping band. The same feature can also be applied to the other surrounding frequencies f2p, f3p, f1m, f2m and f3m.

The surrounding frequency sequentially output from the NCO 31 may be provided outside the pass band of the maximum bandwidth among the pass bands of the band limit filter 9. The surrounding frequencies f4p and f4m are the frequencies outside the pass band BW4 of the maximum bandwidth among the pass bands of the band limit filter 9.

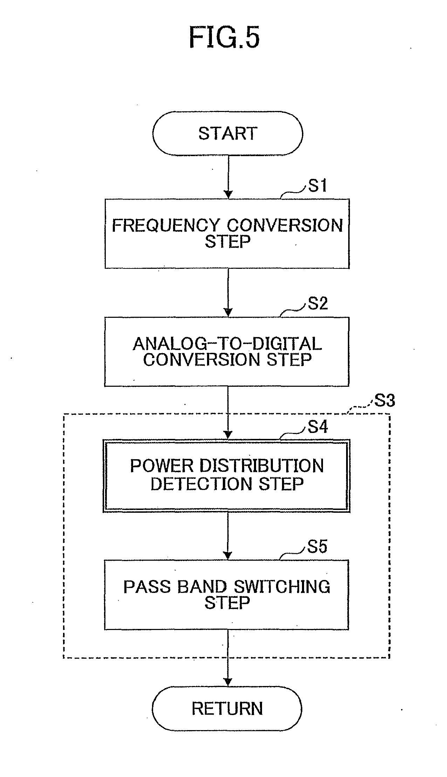

FIG. 5 is a flowchart for explaining the signal processing method performed by the tuner circuit 100.

The signal processing method includes a frequency conversion step S1, an AD conversion step S2, and a demodulation step S3.

At the frequency conversion step S1, the frequency conversion unit performs frequency conversion of a high-frequency signal which is received at the antenna 1 into an intermediate-frequency signal containing an intermediate frequency corresponding to a signal component of a desired channel as a frequency component.

At the AD conversion step S2, the ADC 8 performs AD conversion of the intermediate-frequency signal into a digital signal. At the demodulation step S3, the digital demodulation unit 300 demodulates the digital signal.

The demodulation step S3 includes a power distribution detection step S4 and a pass band switching step S5.

At the power distribution detection step S4, the IF power detecting unit 10 detects a power distribution of the signal component of the desired channel and a power distribution of the signal component of the neighboring channel adjacent to the desired channel, based on the digital signal before being input to the band limit filter 9.

At the pass band switching step S5, the control unit 35 switches the pass band of the band limit filter 9 to the pass band which is selected from among the plurality of pass bands thereof based on the power distribution of the signal component of the desired channel detected in the detection step S4 and the power distribution of the signal component of the neighboring channel detected in the detection step S4.

Because the band limit filter 9 is a digital filter, the control unit 35 can change the bandwidth of the pass band of the band limit filter 9 by changing the plurality of filter coefficients for defining the characteristic of the pass band of the digital filter. For example, when changing the pass band of the band limit filter 9 to the pass band BW1, the control unit 35 may change the previous filter coefficients to the filter coefficients for defining the characteristic of the pass band BW1. The same feature can also be applied to the other pass bands BW2-BW4.

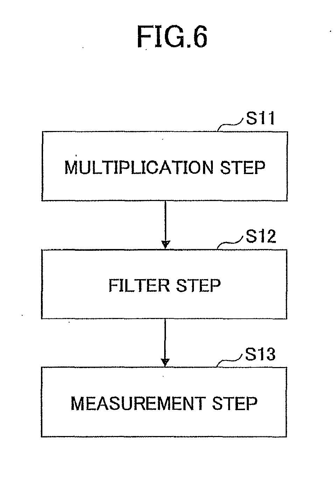

FIG. 6 is a flowchart for explaining the process performed at the power distribution detection step S4. The detection step S4 includes a multiplication step S11, a filter step S12, and a measuring step S13.

At the multiplication step S11, the digital mixer 32 performs multiplication of the digital signal (before being input to the band limit filter 9), by the sine wave signal whose frequency sequentially changes one among the intermediate frequency and the surrounding frequencies of the intermediate frequency.

At the filter step S12, the multiplication value obtained in the multiplication step S11 is filtered by the low pass filter 33. At the measuring step S13, the measuring unit 34 measures the power of the signal component of the center frequency and the power of the signal component of the surrounding frequencies based on the output signal of the low pass filter 33 obtained in the filter step S12.

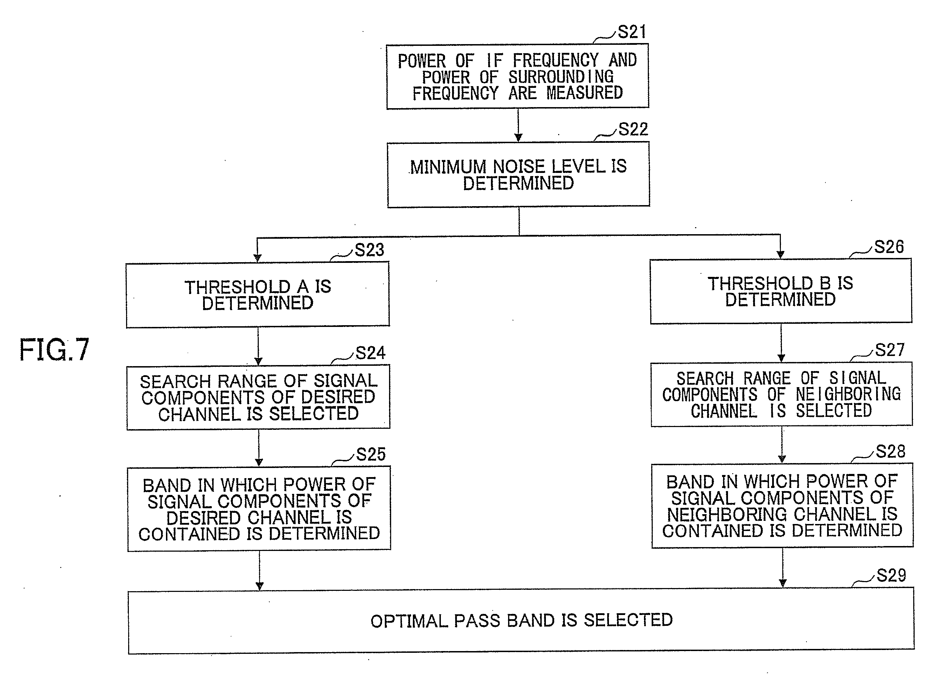

FIG. 7 is a flowchart for explaining the detailed process performed at the power distribution detection step S4.

At step S21, the measuring unit 34 measures the power of the signal component of the intermediate frequency and the powers of the signal components of surrounding frequencies. At step S22, the control unit 35 determines the minimum power among all the powers measured by the measuring unit 34 as being the minimum noise level Npow.

The control unit 35 determines the measured powers used for detection of the power distributions of the signal components of the desired channel and the neighboring channel from among the measured values measured by the measuring unit 34, based on the relationship in magnitude between the high frequency side measured values (the measured powers of the signal components of the surrounding frequencies on the high frequency side of the intermediate frequency) measured by the measuring unit 34 and the low frequency side measured values (the measured powers of the signal components of the surrounding frequencies on the low frequency side of the intermediate frequency) measured by the measuring unit 34.

For example, in the case of FIG. 4, the high frequency side measured values are equivalent to the powers pow1p-pow4p, and the low frequency side measured values are equivalent to the powers pow1m-pow4m. For example, the control unit 35 may determine the relationship in magnitude between the high frequency side measured values and the low frequency side measured values by comparison of the average of the low frequency side measured values measured by the measuring unit 34 with the average of the high frequency side measured values measured by the measuring unit 34. Alternatively, the determination may be made by comparison of the maximum of the high frequency side measured values with the maximum of the low frequency side measured values.

The control unit 35 detects the band which includes the power distribution of the signal component of the desired channel based on the smaller one of the high frequency side measured values and the low frequency side measured values. It can be understood that a neighboring channel adjacent to the desired channel does not exist in the band in which the smaller measured values with respect to the intermediate frequency are obtained. Because it can be understood that a neighboring channel does not exist, the band including the power distribution of the signal component of the desired channel can be easily detected based on the smaller measured values.

The control unit 35 detects the band which includes the power distribution of the signal component of a neighboring channel based on the larger one of the high frequency side measured values and the low frequency side measured values. It can be understood that the neighboring channel adjacent to the desired channel exists in the band where the larger measured values with respect to the intermediate frequency are obtained. Because it can be understood that the neighboring channel exists, the band including the power distribution of the signal component of the neighboring channel can be easily detected based on the larger measured values.

For example, the control unit 35 detects the power distribution of the signal component of the desired channel and the power distribution of the signal component of the neighboring channel based on the threshold which is determined according to the powers measured by the measuring unit 34.

The control unit 35 estimates the band where the power distribution of the signal component of the desired channel exists, and estimates the band where the power distribution of the signal component of the neighboring channel exists. The control unit 35 determines a band in which a power exceeding a first threshold among the smaller measured powers of the high frequency side measured values and the low frequency side measured values exists as being the band including the power distribution of the signal component of the desired channel.

The control unit 35 determines a band in which a power exceeding a second threshold among the larger measured powers of the high frequency side measured values and the low frequency side measured values exists as being the band including the power distribution of the signal component of the neighboring channel.

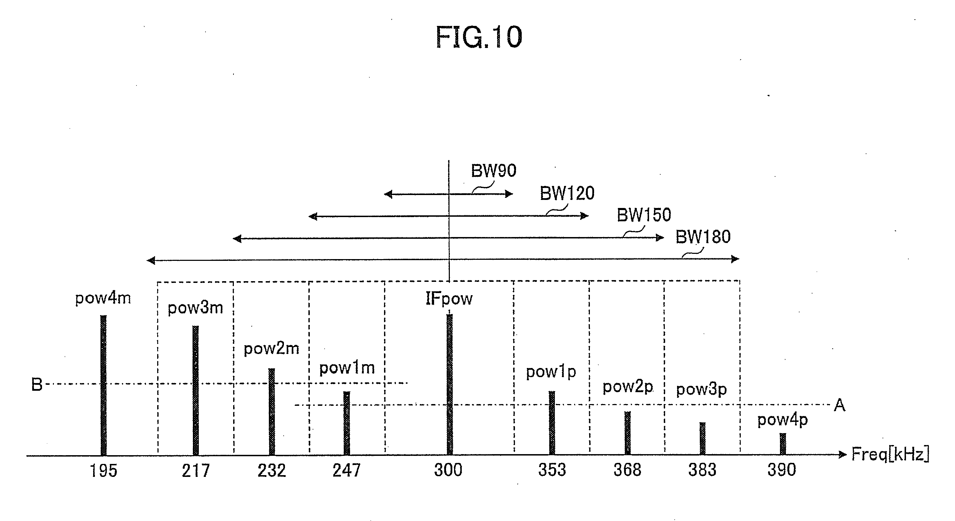

At step S23, the control unit 35 determines a threshold A (which is the first threshold for specifying the signal component of the desired channel) based on the power IFpow of the signal component of the intermediate frequency and the minimum noise level Npow (see FIGS. 4 and 10). For example, the threshold A may be set to (IFpow + Npow) x α. α is, for example, a coefficient in a range of 0 and 1. Alternatively, α may be set to be a value which is above {Npow/ (IFpow + Npow)} and below {IFpow/ (IFpow + Npow)}. By setting α to be the coefficient in this range, the threshold A can be set to the value that can easily specify the signal component of the desired channel.

At step S24, the control unit 35 compares the power of the signal component of the surrounding frequencies on the low frequency side of the intermediate frequency and the power of the signal components of surrounding frequencies on the high frequency side of the intermediate frequency, and selects the smaller power band where the smaller power is included as being a search range of the signal component of the desired channel. That is, at step S24, it is detected as to what frequency band the signal component of the desired channel spreads to.

At step S25, the control unit 35 determines the power exceeding the threshold A among the powers measured in the smaller power band by the measuring unit 34 as being the power of the signal component of the desired channel. On the other hand, the control unit 35 determines that there is no signal component of the desired channel in the band whose power does not exceed the threshold A among the powers measured in the smaller power band by the measuring unit 34.

At step S26, the control unit 35 determines a threshold B (which is the second threshold for specifying the signal component of the neighboring channel) based on the power IFpow of the signal component of the intermediate frequency and the minimum noise level Npow (see FIGS. 4 and 10). For example, the threshold B may be set to (IFpow + Npow)x β. β is, for example, a coefficient in a range of 0 and 2. By setting β to a coefficient exceeding 1, the signal component of the neighboring channel with a power larger than that of the signal component of the desired channel can be specified. Alternatively, β may be set to be a value which is above {Npow/(IFpow + Npow)} and below {IFpow/ (IFpow + Npow)}. By setting β to the coefficient in this range, the threshold B can be set to the value which can easily specify the signal component of the neighboring channel.

At step S27, the control unit 35 compares the power of the signal component of the surrounding frequencies on the low frequency side of the intermediate frequency and the power of the signal component of the surrounding frequencies on the high frequency side of the intermediate frequency, and selects the large power band where the larger power is included as being a search range of the signal component of the neighboring channel. That is, at step S27, it is detected as to what frequency band the signal component of the neighboring channel spreads to.

At step S28, the control unit 35 determines the power exceeding the threshold B among the powers measured in the large power band by the measuring unit 34 as being the power of the signal component of the neighboring channel. On the other hand, the control unit 35 determines that there is no signal component of the neighboring channel in the band whose power does not exceed the threshold B among the powers measured in the large power band by the measuring unit 34.

At step S29, the control unit 35 selects, as the optimal pass band of the band limit filter 9, a pass band which includes the band determined as including the power distribution of the signal component of the desired channel and does not include the band determined as including the power distribution of the signal component of the neighboring channel, from among the plurality of pass bands provided beforehand in the band limit filter 9. That is, the control unit 35 selects the pass band in which the power of the signal component of the desired channel exceeds the threshold A and the power of the signal component of the neighboring channel does not exceed the threshold B.

For example, the control unit 35 compares the power of the signal component of the frequencies on the low frequency side of the intermediate frequency with the power of the signal components of frequencies on the high frequency side of the intermediate frequency. The control unit 35 extends the bandwidth of the pass band until the power of the larger power exceeds the threshold A, and narrows the bandwidth of the pass band until the smaller power does not exceed the threshold B.

Next, the simulation result of the signal processing method of the present embodiment will be described.

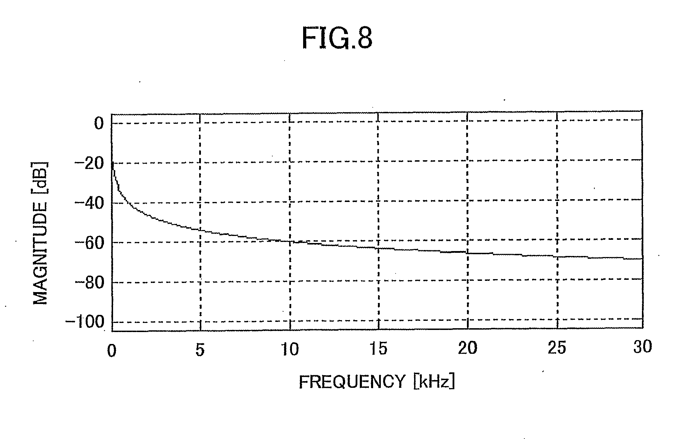

FIG. 8 is a diagram showing filter characteristics of the low pass filter 33. The sine wave signal by which the intermediate-frequency signal is multiplied is changed every 20ms (which may be modified) per one frequency. During the period in which the frequency of the sine wave signal is changed to the following frequency, one or more cycles of signals with frequencies higher than 50Hz of the audio signal frequency (20ms per one cycle) will be included. By increasing the period, the lower frequencies may be detected. However, the time needed for determining the optimal filter is extended in such a case, and it is necessary to make the balanced selection. Hence, the switching interval of the frequencies output from the NCO 31 may be determined according to the specifications.

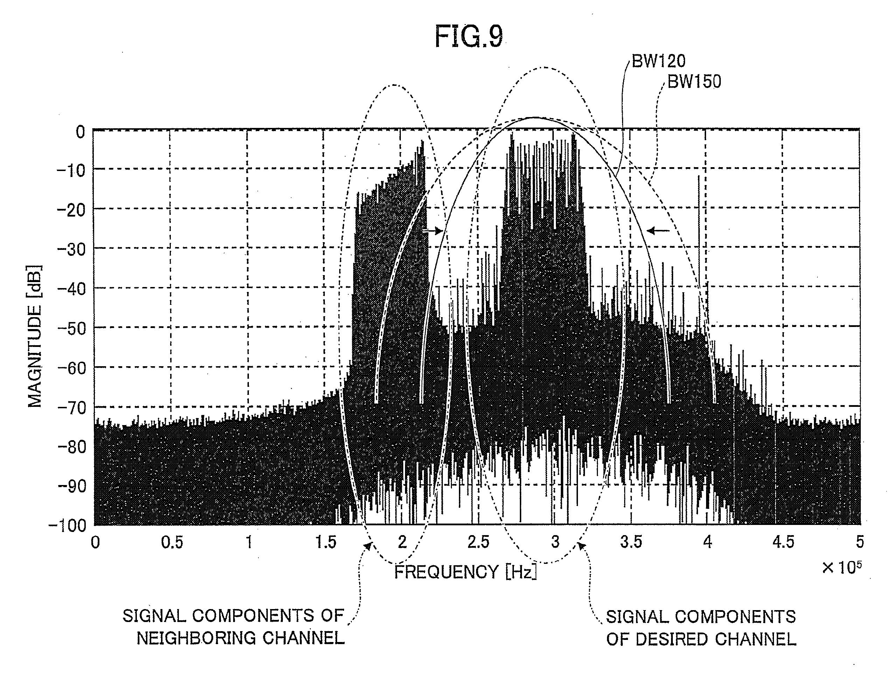

FIG. 9 is a diagram showing a power distribution of an output signal of the ADC 8. In the case shown in FIG. 9, the intermediate frequency fa corresponding to the channel frequency of the desired channel is 300 kHz, and the frequency corresponding to the channel frequency of the neighboring channel is 200 kHz. The waveform of the output signal before being input to the band limit filter 9 is shown in FIG. 9, and it can be understood that the signal component of the neighboring channel is contained as interference noise.

FIG. 10 is a diagram showing the relationship between the pass band of the band limit filter 9 and the powers measured by the measuring unit 34. In the case of the power distribution of FIG. 9, the powers of the intermediate frequency and the surrounding frequencies as shown in FIG. 10 are detected by the IF power detecting unit 10.

Based on the detection result of FIG. 10, the control unit 35 performs the comparison of the power of each of the surrounding frequencies with the threshold B, sequentially from the low frequency side to the high frequency side. The pass bands including the surrounding frequencies whose power exceeds the threshold B (namely, BW 180 and BW 150) are excepted from the pass band candidate to be set to the band limit filter 9, and the pass band including the surrounding frequencies whose power does not exceed the threshold B (namely, BW 120) is selected as the pass band candidate to be set to the band limit filter 9. By setting the thus selected pass band to the band limit filter 9, the signal of the neighboring channel can be attenuated appropriately.

Based on the detection result of FIG. 10, the control unit 35 performs the comparison of the power of each of the surrounding frequencies with the threshold A, sequentially from the high frequency side to the low frequency side. The pass bands including the surrounding frequencies whose power does not exceed the threshold A (namely, BW 180 and BW 150) are excepted from the pass band candidate to be set to the band limit filter 9, and the pass band including the surrounding frequencies whose power exceeds the threshold A (namely, BW 120) is selected as the pass band candidate to be set to the band limit filter 9.

By setting the thus selected pass band to the band limit filter 9, the attenuation of the signal of the desired channel can be prevented.

As a result, the pass bands with the bandwidth of 120 kHz which satisfy the respective conditions are selected. Accordingly, both improvement in the receiving performance of the desired channel and reduction of the interference noise of the neighboring channel can be attained.

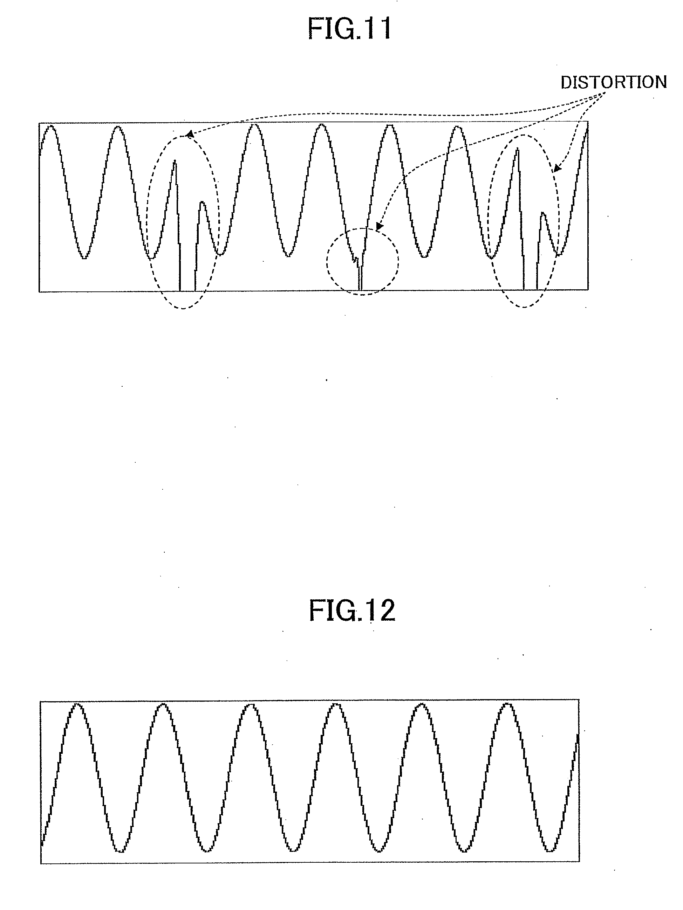

FIG. 11 is a diagram showing a waveform of audio signals output when selecting pass band BW 180 whose bandwidth is 180 kHz in the power distribution of FIG. 9.

FIG. 12 is a diagram showing a waveform of audio signals output when selecting pass band BW 120 whose bandwidth is 120 kHz in the power distribution of FIG. 9.

Because the audio signal in the case of FIG. 11 is distorted when the signal component of the neighboring channel is mixed with the signal component of the desired channel, the audibility will deteriorate.

On the other hand, since the signal component of a neighboring channel is not mixed with the signal component of the desired channel in the case of FIG. 12, distortion of an audio signal disappears and the fall of audibility can be prevented.

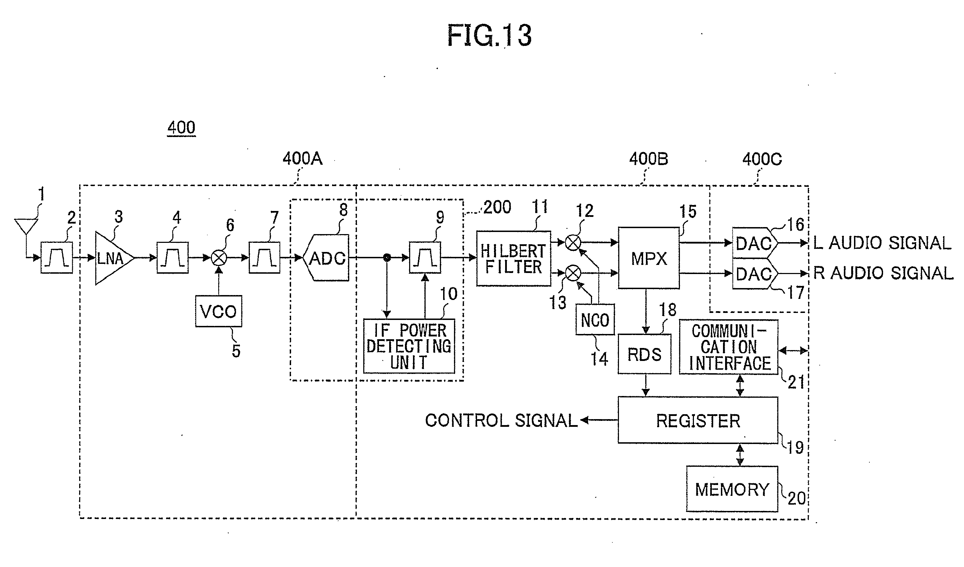

FIG. 13 shows a radio tuner IC 400 which is an example of signal processing device.

The radio tuner IC 400 is a receiving set which can receive stereo FM broadcasting. In FIG. 13, 400A and 400C denote analog blocks, and 400B denote a digital block. The RDS (radio data system) 18 outputs the RDS data extracted from the FM multiple signal.

The DAC 16 (17) converts the stereo sound signal of the digital format decoded by the multiplexer 15 into the stereo sound signal of analog format.

The present disclosure is not limited to the above-described embodiments, and variations and modifications may be made without departing from the scope of the present disclosure.

For example, in FIG. 1, the LNA 3 and the VCO 5 may be provided in the exterior of the IC. The RF band pass filter 2 may be formed in the inside of the IC.

Depending on the environment where the signal processing device is used, the signal may be influenced by interference noise of the neighboring channel even if a filter with a narrow pass band is used, or even if a filter with a narrow pass band is not used, the signal may not be influenced by interference noise of the neighboring channel. To avoid the problem, the pass band suitable for the environment where each signal processing device is used can be externally selected as a pass band of a filter unit by enabling the setting of one or more pass bands which can be selected as the pass band of the filter unit in each signal processing device. Hence, the receiving performance of the desired channel can be improved effectively and the interference noise of the neighboring channel can be reduced effectively.

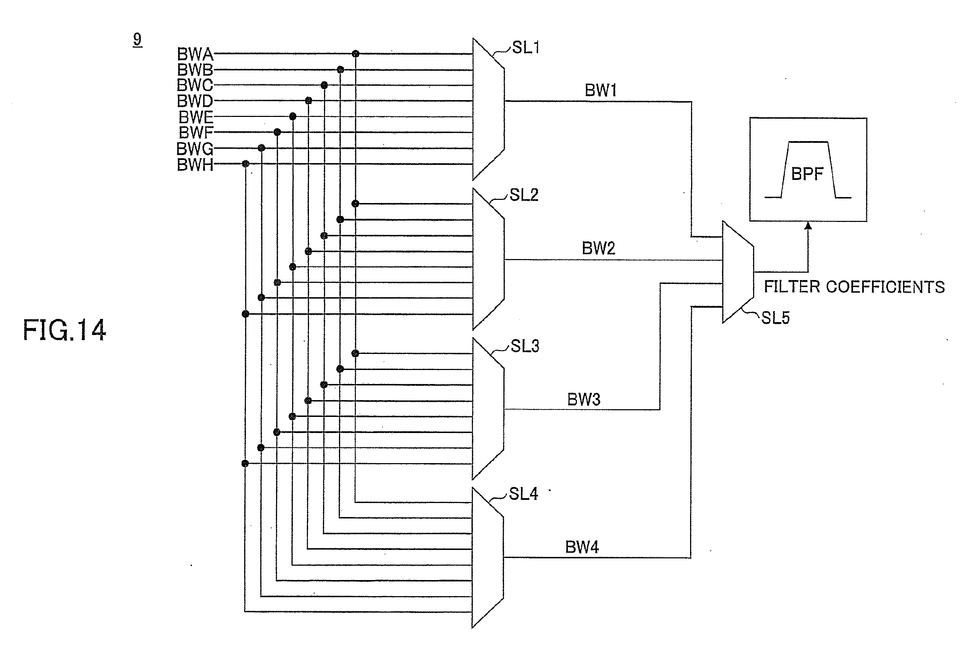

For example, the four selector circuits SL1-SL4 shown in FIG. 14 specify four pass bands BW1-BW4 according to the register value set up by the command signal from the signal processing device from among eight pass band candidates BWA-BWH which are mutually different. The four pass bands BW1-BW4 specified according to the register value are set to the pass bands which can be selected as a pass band of the band limit filter 9.

The filter coefficients for determining the pass band candidates BWA-BWH are stored beforehand in the storage device (for example, the memory 20 in FIG. 13) provided in the signal processing device. The kind of pass band which can be selected as the pass band of the band limit filter 9 can be easily increased within the limits of the storage capacity of the storage device, without increasing the circuit area by storing beforehand the filter coefficients for determining the pass band candidates BWA-BWH in the storage device. The above-mentioned register value is stored in the configuration register 19 shown in FIG. 13.

The register value of the configuration register 19 can be changed from the exterior of the IC 400 by the command signal input via the communication interface 21. Therefore, in the composition of FIG. 13, the four selector circuits SL1-SL4 as shown in FIG. 14 specify the filter coefficients for determining the pass bands BW1-BW4 which can be selected as the pass band of the band limit filter 9, from among the filter coefficients for determining the pass band candidates BWA-BWH stored beforehand according to the register value of the configuration register 19.

The pass bands BW1-BW4 specified from among the pass band candidates BWA-BWH can be changed according to the content of the register value set up by the command signal from the signal processing device outside, and the measuring unit 34 has to change the surrounding frequency, such as the above-mentioned f1p which requires the power measurement, according to the specified pass bands BW1-BW4 (see FIG. 4).

In order to change the surrounding frequencies at which the power measurement is performed by the measuring unit 34, the surrounding frequencies sequentially output from the NCO 31 shown in FIG. 2 may be changed. That is, the NCO 31 may change the surrounding frequencies output to the digital mixer 32 according to the pass bands BW1-BW4 specified from among the pass band candidates BWA-BWH.

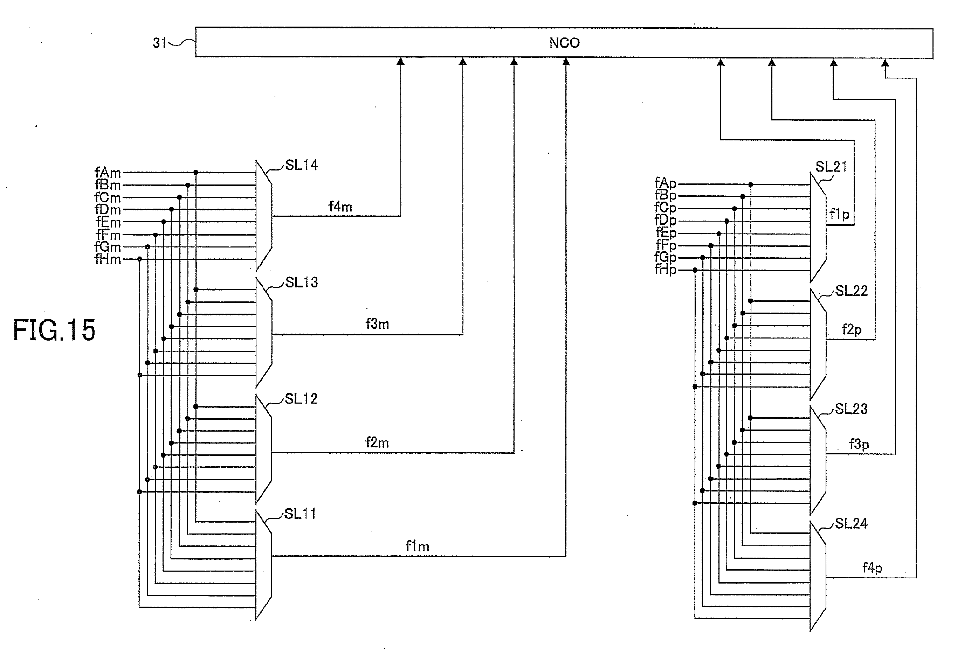

For example, the four selector circuits SL11-SL14 shown in FIG. 15 are provided to specify the four low frequency side surrounding frequencies f1m-f4m from among the eight low frequency side surrounding frequency candidates fAm-fHm, according to the register value set up by the command signal from the signal processing device outside. The NCO 31 outputs the four low frequency side surrounding frequencies f1m-f4m specified according to the register value to the digital mixer 32 respectively. Similarly, the four selector circuits SL21-SL24 are provided to specify the four high frequency side surrounding frequencies f1p-f4p from among the eight high frequency side surrounding frequency candidates fAp-fHp according to the register value set up by the command signal from the signal processing device outside. The NCO 31 outputs the four high frequency side surrounding frequencies f1p-f4p specified according to the register value to the digital mixer 32 respectively.

The low frequency side surrounding frequency candidates fAm-fHm and the high frequency side surrounding frequency candidates fAp-fHp are stored beforehand in the storage device (for example, the memory 20 in FIG. 13) provided in the signal processing device. The above-mentioned register value for specifying the low frequency side surrounding frequencies f1m-f4m and the high frequency side surrounding frequencies f1p-f4p is stored in the configuration register 19 as shown in FIG. 13. The register value of the configuration register 19 may be changed by the input command signal sent from the exterior of the IC 400 via the communication interface 21.

The frequency of the low frequency side surrounding frequency candidate fAm is set by the formula: (intermediate frequency fa - half of the bandwidth of the pass band candidate BWA - offset gamma), and the frequency of fBm is set by the formula: (intermediate frequency fa - half of the bandwidth of the pass band candidate BWB - offset gamma). The frequencies of fCm-fHm may be set in the same manner.

The frequency of the high frequency side surrounding frequency candidate fAp is set by the formula: (intermediate frequency fa + half of the bandwidth of the pass band candidate BWA + offset gamma), and the frequency of fBp may be set by the formula (intermediate frequency fa + half of the bandwidth of pass band candidate BWB + offset gamma). The frequencies of fCp-fHp may be set in the same manner.

For example, when the intermediate frequency fa is 300 kHz and the bandwidths of the pass band candidates BWA-BWH are 50, 78, 104, 132, 158, 186, 212, 240 kHz, the frequencies of the low frequency side surrounding frequency candidates fAm frequency is set to (275 - y) kHz, and the frequency of fBm is set to (261 - y) kHz. The frequencies of fCm-fHm may be set in the same manner.

The frequency of the high frequency side surrounding frequency candidate fAp is set to (325 + γ) kHz, and the frequency of fBp is set to (339 + γ) kHz. The frequencies of fCp-fHp are set in the same manner. γ denotes the offset from the band end of the pass band candidates BWA-BWH. By changing the offset gamma, the surrounding frequencies which detect the power can be set to a place distant from a near place from the band end of the pass band candidates BWA-BWH. If γ can be set to a value specific to each signal processing device, it is desirable for the improved receiving performance.

Thus, the power distribution detection step S4 and the pass band switching step S5 as shown in FIG. 5 are performed by using the pass bands BW1-BW4 and the surrounding frequencies f1m-f4m and f1p-f4p which are determined according to the register value set up by the command signal from the signal processing device outside. By the selector circuit SL5 shown in FIG. 14, the filter coefficients compatible in improvement in the receiving performance of the desired channel and reduction of the interference noise of a neighboring channel are selected from among the filter coefficients for determining pass bands BW1-BW4 as being the filter coefficients for determining the pass band of the band limit filter 9.

The present disclosure is not limited to the above-described embodiments, and variations and modifications may be made without departing from the scope of the present disclosure.

The present international application is based on and claims the benefit of foreign priority of Japanese patent application No. 2009-210210, filed on September 11, 2009, the contents of which are incorporated herein by reference in their entirety.

### DESCRIPTION OF THE REFERENCE NUMERALS

- 1: Antenna
- 2: RF Band Pass Filter
- 3: Low Noise Amplifier
- 4: RF Band Pass Filter
- 5: Voltage Generator
- 6: Mixer
- 7: IF Band Pass Filter
- 8: AD Converter
- 9: Band Limit Filter
- 10: IF Power Detecting Unit
- 31: NCO
- 32: Digital Mixer
- 33: Low Pass Filter
- 34: Measuring Unit
- 35: Control Unit
- 100: Tuner Circuit
- 200: Monitoring Circuit
- 300: Digital Demodulation Unit
- 400: Radio Tuner IC
- SL**: Selector Circuit

## Claims

1. A signal processing device which processes a received high-frequency signal, comprising:
a frequency conversion unit to perform frequency conversion of the received high-frequency signal into an intermediate-frequency signal corresponding to signal components of a desired channel;
an AD conversion unit to perform AD conversion of the intermediate-frequency signal into a digital signal; and
a digital demodulation unit to demodulate the digital signal, the digital demodulation unit comprising:
a filter unit having a plurality of pass bands which are mutually different to generate an output signal containing the signal components of the desired channel from the digital signal; and
a detecting unit to detect a power distribution of the signal components of the desired channel and a power distribution of signal components of a neighboring channel adjacent to the desired channel from the digital signal before being input to the filter unit,
wherein a pass band of the filter unit is switched to a pass band which is selected from among the plurality of pass bands based on the power distributions of the signal components of the desired channel and the neighboring channel detected by the detecting unit.

2. The signal processing device according to claim 1, wherein the detecting unit comprises:
a digital mixer which performs multiplication of the digital signal before being input to the filter unit by a sine wave signal whose frequency is changed to one of the intermediate frequency and surrounding frequencies of the intermediate frequency;
a low pass filter to which an output signal of the digital mixer is input; and
a measuring unit which measure powers of signal components of the intermediate frequency and powers of signal components of the surrounding frequencies based on an output signal of the low pass filter,
wherein a power distribution of the signal components of the desired channel and a power distribution of the signal components of the neighboring channel are detected based on a measurement result from the measuring unit.

3. The signal processing device according to claim 2, wherein the measured values used for detection of power distributions of the signal components of the desired channel and the neighboring channel are determined from among the measured values measured by the measuring unit, based on a relationship in magnitude between high frequency side measured values, which are measured powers of the signal components of surrounding frequencies on the high frequency side of the intermediate frequency output from the measuring unit, and low frequency side measured values, which are measured powers of the signal components of surrounding frequencies on the low frequency side of the intermediate frequency output from the measuring unit.

4. The signal processing device according to claim 3, wherein a band including the power distribution of the signal components of the desired channel is detected based on a smaller one of the high frequency side measured values and the low frequency side measured values, and a band including the power distribution of the signal components of the neighboring channel is detected based on a larger one of the high frequency side measured values and the low frequency side measured values.

5. The signal processing device according to claim 4, wherein a band where a power exceeding a first threshold exists among the measured powers of the smaller one is determined as being a band including the power distribution of the signal components of the desired channel, and a band where a power exceeding a second threshold exists among the measured values of the larger one is determined as being a band including the power distribution of the signal components of the neighboring channel.

6. The signal processing device according to claim 5, wherein a band which does not include the band determined as including the power distribution of the signal components of the neighboring channel and includes the band determined as including the power distribution of the signal components of the desired channel is selected from the plurality of pass bands of the filter unit as a pass band of the filter unit.

7. The signal processing device according to claim 5 or 6, wherein each of the first threshold and the second threshold are a setting value which is determined according to the measured values output from the measuring unit.

8. The signal processing device according to claim 7, wherein the setting value is larger than a smallest value among the measured values output from the measuring unit.

9. The signal processing device according to any one of claims 2 to 8, wherein each of the surrounding frequencies is a frequency in a non-overlapping region where a first band of the plurality of pass bands of the filter unit and a second band of the plurality of pass bands of the filter unit with a bandwidth wider than that of the first band do not overlap with each other.

10. The signal processing device according to any one of claims 1 to 9, wherein a pass band of the filter unit is changed according to a change of filter coefficients for defining a characteristic of the pass band of the filter unit.

11. The signal processing device according to any one of claims 1 to 10, wherein the high-frequency signal is produced from a stereo FM-broadcasting wave received at an antenna.

12. A signal processing method which processes a received high-frequency signal, comprising:
a frequency conversion step of performing frequency conversion of the received high-frequency signal into an intermediate-frequency signal corresponding to signal components of a desired channel;
an AD conversion step of performing AD conversion of the intermediate-frequency signal into a digital signal; and
a demodulation step of demodulating the digital signal,
the demodulation step comprising:
a detection step of detecting a power distribution of the signal components of the desired channel and a power distribution of signal components of a neighboring channel adjacent to the desired channel from the digital signal before being input to a filter unit having a plurality of pass bands which are mutually different to generate an output signal containing the signal components of the desired channel from the digital signal; and
a switching step of switching a pass band of the filter unit to a pass band selected from the plurality of pass bands based on the power distributions of the signal components of the desired channel and the neighboring channel detected in the detection step.

13. The signal processing method according to claim 12, further comprising:
a multiplication step of performing multiplication of the digital signal before being input to the filter unit by a sine wave signal whose frequency is changed to one of the intermediate frequency and surrounding frequencies of the intermediate frequency;
a filter step of filtering a multiplication value obtained in the multiplication step by a low pass filter; and
a measurement step of measuring powers of signal components of the intermediate frequency and powers of signal components of the surrounding frequencies based on an output signal of the low pass filter obtained in the filter step,
wherein, in the detection step, a power distribution of the signal components of the desired channel and a power distribution of the signal components of the neighboring channel are detected based on a measurement result obtained in the measurement step.

14. The signal processing method according to claim 13, wherein the measured values used for detection of power distributions of the signal components of the desired channel and the neighboring channel are determined from among the measured values measured in the measurement step, based on a relationship in magnitude between high frequency side measured values, which are measured powers of the signal components of surrounding frequencies on the high frequency side of the intermediate frequency obtained in the measurement step, and low frequency side measured values, which are measured powers of the signal components of surrounding frequencies on the low frequency side of the intermediate frequency obtained in the measurement step.

15. The signal processing method according to claim 14, wherein a band including the power distribution of the signal components of the desired channel is detected based on a smaller one of the high frequency side measured values and the low frequency side measured values, and a band including the power distribution of the signal components of the neighboring channel is detected based on a larger one of the high frequency side measured values and the low frequency side measured values.

16. The signal processing method according to claim 15, wherein a band where a power exceeding a first threshold exists among the measured powers of the smaller one is determined as being a band including the power distribution of the signal components of the desired channel, and a band where a power exceeding a second threshold exists among the measured values of the larger one is determined as being a band including the power distribution of the signal components of the neighboring channel.

17. The signal processing method according to claim 16, wherein a band which does not include the band determined as including the power distribution of the signal components of the neighboring channel and includes the band determined as including the power distribution of the signal components of the desired channel is selected from the plurality of pass bands of the filter unit as a pass band of the filter unit.
